Europäisches Patentamt

European Patent Office

Office européen des brevets

(11) Numéro de publication: **0 227 591
B1**

(12) **FASCICULE DE BREVET EUROPEEN**

(51) Int. Cl.⁴: **G01D 5/24**

(45) Date de publication du fascicule du brevet:
**31.01.90**

(21) Numéro de dépôt: **86810450.6**

(22) Date de dépôt: **10.10.86**

---

(54) **Dispositif de mesure capacitif de longueurs et d'angles.**

---

(30) Priorité: **22.11.85 CH 5004/85**

(43) Date de publication de la demande:
**01.07.87 Bulletin 87/27**

(45) Mention de la délivrance du brevet:
**31.01.90 Bulletin 90/5**

(84) Etats contractants désignés:
**DE FR GB**

(73) Titulaire: **Meyer, Hans Ulrich, 42, rue de Lausanne,
CH-1110 Morges(CH)**

(72) Inventeur: **Meyer, Hans Ulrich, 42, rue de Lausanne,
CH-1110 Morges(CH)**

(74) Mandataire: **Ardin, Pierre, PIERRE ARDIN & CIE 22, rue
du Mont-Blanc Case postale 60, CH-1211 Genève 1(CH)**

(56) Documents cités:
EP-A- 0 053 091
DE-A- 2 217 183
DE-A- 3 340 782
DE-A- 3 418 566
FR-A- 2 483 603
US-A- 3 723 866

IBM TECHNICAL DISCLOSURE BULLETIN,
vol. 21, no. 1, juin 1978, pages 242-243, New York, US;
D.R. DOBSON et al.: "Position encoder"

ACTORUM AG

## Description

La présente invention concerne un dispositif capacitif de mesure de longueurs et d'angles comportant une première et deuxième parties agencées de façon coulissante suivant une direction de déplacement et de mesure l'une par rapport à l'autre, la première partie portant des électrodes émettrices allongées, arrangées perpendiculairement à ladite direction pour former une série, et au moins deux électrodes réceptrices disposées latéralement des deux côtés de cette série, la seconde partie étant munie d'électrodes de couplage s'emboîtant les unes dans les autres, ces électrodes de couplage présentant une partie verticale agencée en regard de électrodes émettrices et une partie horizontale disposée en regard des électrodes réceptrices, un montage électronique étant agencé de façon à mesurer le déplacement relatif des deux parties par couplage capacitif au moyen des électrodes de couplage entre les électrodes émettrices et réceptrices.

On connaît déjà un tel dispositif par la demande de brevet allemand N° 3 340 782 qui décrit une règle comportant deux rangées d'électrodes de couplage en forme de T s'interpénétrant et assurant un couplage efficace, car la surface de couplage avec les électrodes réceptrices est grande. Les électrodes de couplage sont généralement fabriquées par découpage d'une couche métallisée par des moyens adéquats, par exemple un découpage par rayon laser. Ce découpage est compliqué dans le dispositif connu, aussi est-il difficile d'obtenir une grande précision de découpe, ce qui se traduit ensuite par des erreurs de mesure. En outre, il est avantageux de pouvoir allonger ou raccourcir la règle selon les besoins de la mesure par juxtaposition de règles de taille réduite. Une telle juxtaposition n'est cependant pas possible dans le dispositif connu.

Il est le but de la présente invention de remédier à ces inconvénients et le dispositif est caractérisé à cet effet en ce que les électrodes de couplage comportent des formes en L et en L renversé s'emboîtant les unes dans les autres, la partie verticale des formes en L et L renversé étant agencée en regard des électrodes émettrices et la partie horizontale de la forme en L et L renversé étant disposée en regard de l'une ou de l'autre des électrodes réceptrices, ces électrodes de couplage en forme L et de L renversé s'emboîtent deux par deux pour former des paires d'électrodes de couplage arrangées côte à côte et délimitées latéralement par des lignes droites, les parties horizontales des formes en L, respectivement en L renversés étant dirigées suivant une même direction, respectivement une même direction opposée.

Cette disposition permet une découpe précise et rapide des électrodes de couplage et une juxtaposition de règles partielles s'adaptant aux différents besoins de mesure, tout en gardant une surface de couplage avec les électrodes réceptrices aussi grande que possible.

D'autres avantages de l'invention ressortent des revendications dépendantes, en particulier l'arrangement mutuel des électrodes émettrices, réceptrices et de couplage et le montage électronique associé permettant la détermination de la mesure lorsque le signal capté sur les électrodes réceptrices est égal à zéro.

Le dessin annexé représente à titre d'exemple une forme d'exécution du dispositif objet de l'invention.

La figure 1 représente la partie stationnaire du dispositif vue en plan.

La figure 2 illustre le curseur vu de dessous.

La figure 3 est une coupe transversale schématique à travers le dispositif selon C-C des figures 1 et 2.

La figure 4 illustre schématiquement le principe de mesure.

La figure 5 illustre un schéma d'un montage électronique associé.

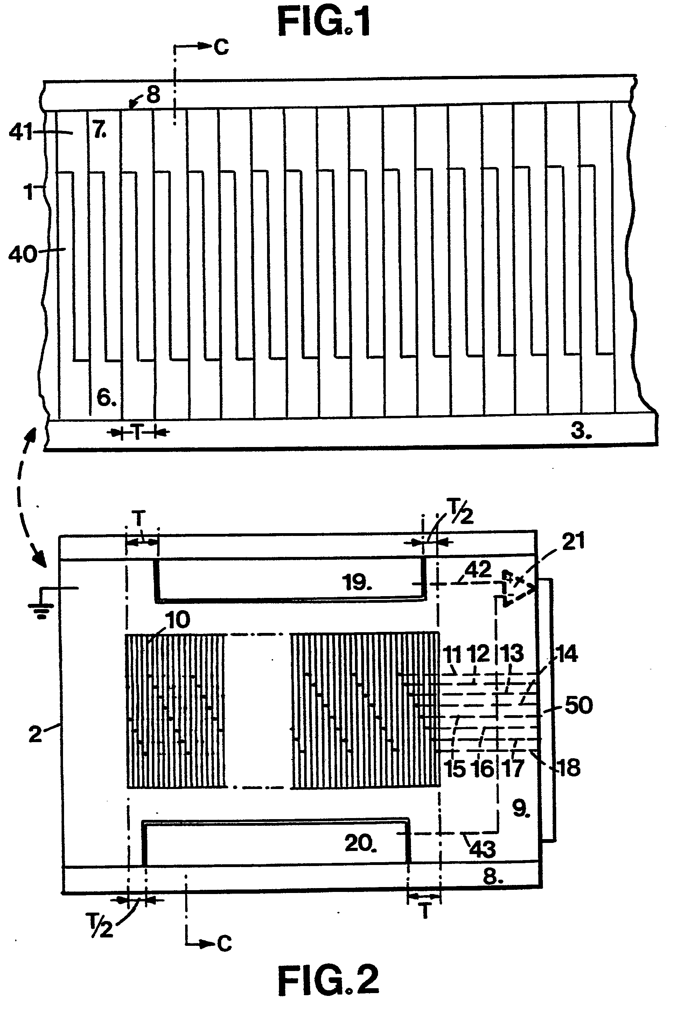

Comme le montrent les figures 1 à 3, le dispositif comprend une partie stationnaire 1 sous forme d'une règle et un curseur 2 disposé de façon coulissante sur cette règle. La partie stationnaire 1 comporte une base 3, de préférence en acier, et un support 4 en matière isolante sur laquelle sont appliquées des électrodes de couplage 6, 7 en matière métallique, isolées les unes par rapport aux autres et sans connexions électriques. Ces électrodes présentent une forme de L et de L renversé de façon qu'une électrode 6 en forme de L s'emboîte avec une électrode 7 en forme de L renversé. Une paire d'électrodes 6 et 7 forme donc un ensemble 8 délimité par deux droites perpendiculaires à la règle et se répétant avec un entre-axe désigné par T. Cette disposition des électrodes de couplage 6, 7 permet de couper la règle suivant une ligne droite ou d'ajouter des règles partielles bout à bout pour constituer une règle de longueur multiple. De plus, cette disposition géométrique très simple permet la fabrication d'une règle par découpage aisé et rapide des électrodes dans une couche métallique évaporée sur le support 4 en matière isolante.

Le curseur 2 est constitué par un bâti 8 coulissant sur la base 3 et une plaque 9 en matière isolante portant sur une de ses faces des électrodes émettrices 10 et des électrodes réceptrices 19, 20 et sur l'autre face une partie du montage électronique 50 associé.

Les électrodes émettrices 10 sont disposées en regard de la partie verticale 40 du L des électrodes de couplage 6, 7 et présentent un entre-axe de $L = T/2N$, 2N étant 8 dans le mode d'exécution représenté. Le nombre total d'électrodes émettrices sur le curseur est de $(2K + 1) \times N$, où K est un nombre entier, dans l'exemple représenté 9. Les électrodes émettrices 10 sont donc au nombre de 76. Elles sont connectées au montage électronique 50 par des fils 11 à 18 avec une périodicité de 2N, donc dans le mode d'exécution représenté, chaque huitième électrode émettrice 10 est reliée à la même sortie du montage électronique 50.

Les électrodes réceptrices 19, 20 sont constituées par des plaques rectangulaires disposées perpendiculairement aux électrodes émettrices 10 et électriquement isolées de ces dernières. Ces électrodes réceptrices sont en regard des parties horizontales 41 du L des électrodes de couplage 6, 7 et leur longueur est un multiple entier de la distance T, dans l'exemple représenté 8T. En outre, l'électrode réceptrice 20 disposée en regard des électrodes de couplage 7 est décalée dans le sens de la longueur du curseur d'une distance T/2 par rapport à l'électrode réceptrice 19. Pour éviter des effets de bords, la longueur des électrodes réceptrices 19, 20 est plus courte que la largeur totale $(K + ¼) \times T$ des électrodes émettrices 10. Dans l'exemple représenté, elle est de $(K - l) \times T$. Le bord des électrodes réceptrices 19, 20 est ainsi décalé d'un côté d'une distance T/2 et de l'autre côté d'une distance T par rapport à la limite extérieure des électrodes émettrices 10.

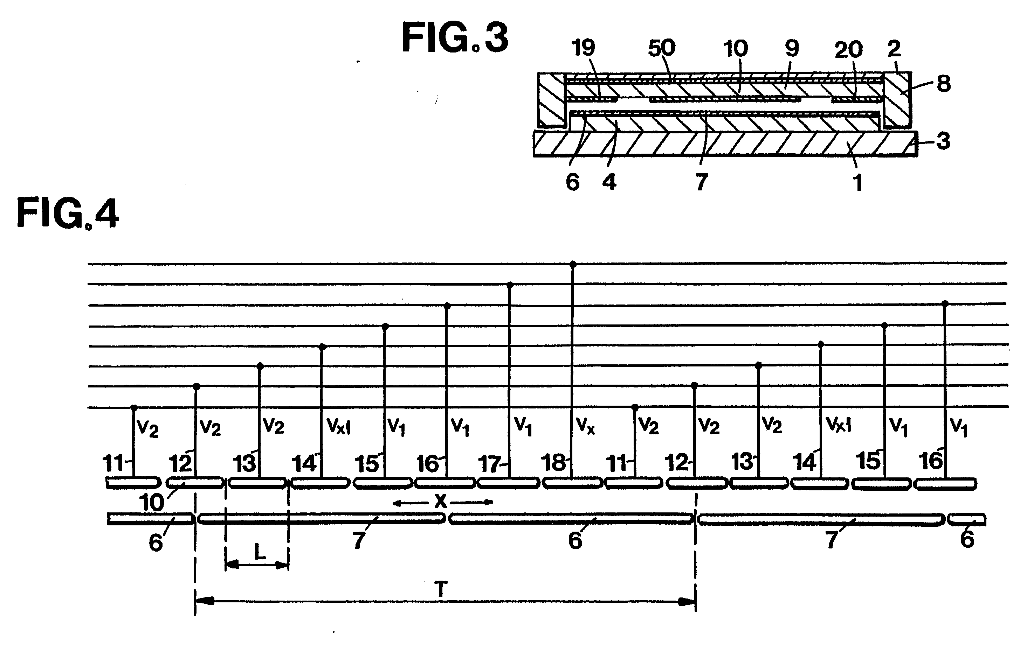

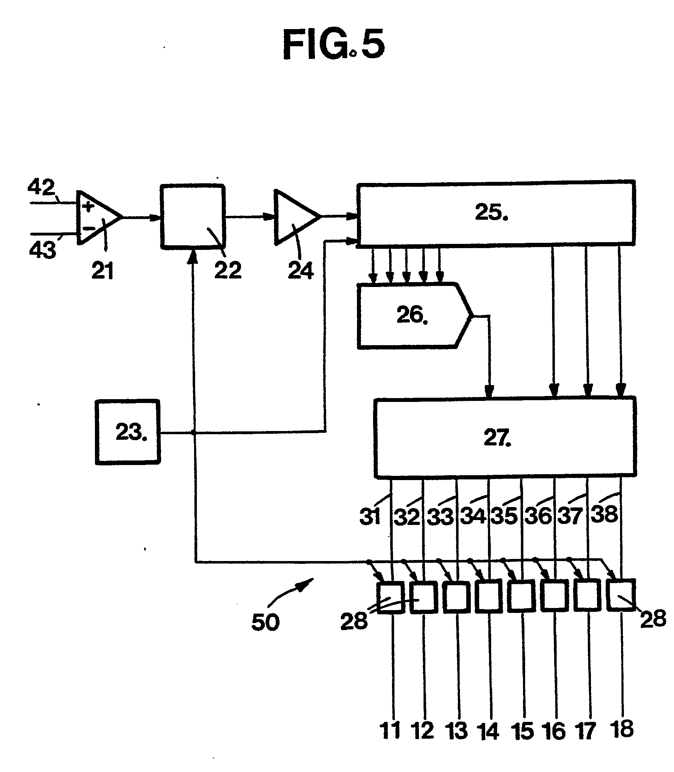

Les électrodes réceptrices, 19, 20 sont connectées par des fils 42, 43 au montage électrique 50 représenté à la figure 5 et dont le principe de mesure est illustré à la figure 4. En référence à cette figure 4, les électrodes 10 disposées en face des électrodes de couplage 6 et 7 sont connectées à quatre tensions alternatives $V_1$, $V_2$, $V_x$ et $V_{x1}$. Les électrodes émettrices 10 qui se trouvent en regard de la portion centrale des électrodes de couplage 6, respectivement 7, sont connectées à une tension variable $V_x$, respectivement $V_{x1}$, tandis que les électrodes voisines sont connectées d'un côté à une tension alternative d'amplitude constante $V_1$ et de l'autre côté à une tension alternative $V_2$, les tensions $V_1$ et $V_2$ présentant une même amplitude et fréquence, mais en opposition de phase. De même, les tensions variables $V_x$ et $V_{x1}$ possèdent la même fréquence que $V_1$ et $V_2$; leur amplitude est identique et varie entre l'amplitude de $V_1$ et $V_2$ en passant par 0, elles sont cependant de phase opposée.

Si l'on pose comme condition de mesure que la somme des courants alternatifs aux électrodes de couplage 6 et 7, donc aux électrodes réceptrices 19, 20, doit être égale à zéro, on constate que pour un déplacement relatif X des électrodes de couplage 6 et 7 par rapport aux électrodes émettrices 10, l'amplitude des tensions $V_x$ et $V_{x1}$ varie linéairement avec le déplacement X et que pour un déplacement sur une distance égale à l'intervalle moyen (L) des électrodes émettrices 10, cette amplitude passe par zéro, du fait qu'un changement de phase se produit de $V_1$ à $V_2$. Les conditions marginales aux limites d'un intervalle (L) correspondant à un intervalle d'interpolation se trouvent donc exactement définies : elles sont remplies si les tensions alternatives provoquées sur les électrodes de couplage 6, respectivement 7, s'annulent pour $V_x = V_1$, respectivement pour $V_x = V_2$. Si cela est le cas, la répartition des électrodes émettrices est déplacée d'une électrode par des moyens électroniques. Ainsi, la répartition des tensions appliquées aux électrodes émettrices est une fonction périodique de la position du curseur 2 ayant une période de 2N électrodes.

La figure 5 représente le schéma d'ensemble d'un montage électronique 50 utilisable à cet effet. Le signal reçu par les fils 42, 43 en provenance des électrodes réceptrices 19, 20 par couplage capacitif au moyen des électrodes de couplage 6, 7 est amplifié par un amplificateur différentiel 21 et amené à basse impédance à un démodulateur synchrone 22 piloté par un oscillateur 23. Le signal est ensuite analysé dans un comparateur 24 qui commande, de son côté, l'entrée de comptage et de décomptage d'un compteur binaire 25. L'entrée de comptage du compteur 25 est reliée, pour simplifier la représentation, également à l'oscillateur 23.

Si le signal démodulé à la sortie du démodulateur est égal à zéro, la sortie du comparateur 24 est également zéro et le compteur 25 reste stationnaire. Au contraire, si le signal démodulé est différent de zéro, la sortie du comparateur est enclenchée et fournit un signal de comptage au compteur 25. Ce dernier change sa valeur de façon synchrone avec l'oscillateur 23 et le démodulateur 22, jusqu'à ce que le signal à la sortie du démodulateur 22 soit égal à zéro.

Les sorties à faible valeur du compteur 25 commandent un transformateur digital-analogique 26 qui fournit la tension de modulation pour la variation d'amplitude qui se produit linéairement en fonction du déplacement sur les électrodes émettrices connectées aux tensions variables $V_x$ et $V_{x1}$. Cette tension de modulation, ainsi que les sorties à haute valeur du compteur, aboutissent à un générateur de fonction 27 qui possède 2N sorties (dans le cas présent, huit sorties) 31 à 38.

Chacune de ces sorties 31 à 38 est amenée à un modulateur 28 raccordé à l'oscillateur 23. Ces modulateurs 28 élaborent à partir des impulsions données par l'oscillateur 23 et les tensions de modulation délivrées à chaque sortie 31 à 38 du générateur 27 une onde modulée sous forme d'une tension alternative $V_1$, $V_2$, $V_x$ ou $V_{x1}$. Ces tensions alternatives sont alors acheminées vers les électrodes émettrices 10.

L'état du compteur 25 est ainsi une mesure directe de la position des électrodes émettrices 10 par rapport aux électrodes de couplage 19, 20, la somme des courants alternatifs aux électrodes de couplage étant zéro. Les valeurs élevées du compteur 25 constituent une mesure grossière du déplacement par comptage de distances L entières parcourues par le curseur et les faibles valeurs du compteur 25 représentent une mesure fine par interpolation linéaire. Une description détaillée de ce procédé d'interpolation est décrit dans le brevet européen No 0053091.

Au lieu de faire varier l'amplitude des tensions alternatives variables $V_x$ et $V_{x1}$ linéairement avec le déplacement x, il est également possible de passer graduellement de la tension alternative $V_1$ à la tension alternative $V_2$ en rendant $V_x$ et $V_{x1}$ alternativement égales à $V_1$ et à $V_2$ avec une durée variable des impulsions, cette durée variant linéairement avec le déplacement, tel que décrit dans le brevet européen cité ci-dessus.

Il est également possible de faire varier $V_x$ et $V_{x1}$ linéairement avec le temps, c'est-à-dire de manière à générer un déplacement fictif continuel, la phase des points de passage par zéro correspondant alors à la valeur du déplacement x.

Il est bien entendu que le rapport des entre-axes T/L des électrodes de couplage et émettrices pourrait être fixé à d'autres valeurs. Aussi, le montage électronique 50 pourrait être constitué différemment, par exemple comme celui décrit dans le brevet suisse N° 643.652.

Les électrodes émettrices et réceptrices pourraient être montées sur la partie stationnaire du dispositif, tandis que les électrodes de couplage seraient disposées sur une règle coulissante. Le dispositif est également utilisable pour la mesure d'angle en disposant par exemple les électrodes de couplage 6, 7 sur le pourtour intérieur d'une enceinte cylindrique et les électrodes émettrices 10 et réceptrices 19, 20 sur une tige cylindrique agencée de façon tournante à l'intérieur de cette enceinte.

## Revendications

1. Dispositif capacitif de mesure de longueurs et d'angles comportant une première (2) et deuxième (1) parties agencées de façon coulissante suivant une direction de déplacement et de mesure l'une par rapport à l'autre, la première partie (2) portant des électrodes émettrices (10) allongées, arrangées perpendiculairement à ladite direction pour former une série, et au moins deux électrodes réceptrices (19, 20) disposées latéralement des deux côtés de cette série, la seconde partie (1) étant munie d'électrodes de couplage (6, 7) s'emboîtant les unes dans les autres, ces électrodes de couplage (6, 7) présentant une partie verticale (40) agencée en regard des électrodes émettrices (10) et une partie horizontale (41) disposée en regard des électrodes receptrices (19, 20), un montage électronique (50) étant agencé de façon à mesurer le déplacement relatif des deux parties par couplage capacitif au moyen des électrodes de couplage (6, 7) entre les électrodes émettrices (10) et réceptrices (19, 20), caractérisé en ce que les électrodes de couplage (6, 7) comportent des formes en L et en L renversé s'emboîtant les unes dans les autres, la partie verticale (40) des formes en L et L renversé étant agencée en regard des électrodes émettrices (10) et la partie horizontale (41) de la forme en L et L renversé étant disposée en regard de l'une ou de l'autre des électrodes réceptrices (19, 20), ces électrodes de couplage (6, 7) en forme de L et de L renversé s'emboîtent deux par deux pour former des paires d'électrodes de couplage arrangées côte à côte et délimitées latéralement par des lignes droites, les parties horizontales des formes en L, respectivement en L renversés étant dirigées suivant une même direction, respectivement une même direction opposée.

2. Dispositif selon la revendication 1, caractérisé en ce que les paires d'électrodes de couplage (6, 7) sont agencées avec une périodicité d'entre-axe d'une distance T et en ce que les électrodes émettrices présentent une largeur telle que 2N électrodes émettrices (10) sont disposées en regard d'une paire d'électrodes de couplage (6, 7), N étant un nombre entier.

3. Dispositif selon la revendication 2, caractérisé en ce que les électrodes réceptrices (19, 20) présentent une longueur égale à un nombre entier de distances T.

4. Dispositif selon la revendication 3. caractérisé en ce qu'il comprend deux électrodes réceptrices (19, 20) décalées l'une par rapport à l'autre d'une distance T/2 dans ladite direction.

5. Dispositif selon la revendication 1, caractérisé en ce que la largeur des électrodes réceptrices (19, 20) est plus petite que la largeur de la série d'électrodes émettrices (10) mesurée selon ladite direction.

6. Dispositif selon la revendication 4, caractérisé en ce que les électrodes émettrices (10) sont connectées à 2N sorties du montage électrique (50) de façon que chaque 2Nième électrode émettrice est connectée à la même sortie du montage électrique (50).

7. Dispositif selon la revendication 6, caractérisé en ce que le montage électronique (50) est agencé de façon que les électrodes émettrices (10) sont sélectivement reliées à des tensions $V_1$ et $V_2$ invariables et à des tensions $V_x$ et $V_{x1}$ variables, les $V_x$ et $V_{x1}$ étant générées de façon que le signal capté sur les électrodes réceptrices (19, 20) par couplage capacitif au moyen des électrodes de couplage (6, 7) devient égal à zéro, les tensions $V_x$ et $V_{x1}$ constituant alors une mesure du déplacement relatif entre la première et la deuxième partie.

## Patentansprüche

1. Kapazitive Längen- und Winkelmeßeinrichtung mit zwei in Richtung und Ausmaß der zu messenden Größe zueinander verschiebbaren Teilen (1, 2), von denen das erste Teil (2) längliche, senkrecht zur Verschieberichtung liegende und eine Reihe bildende Sendeelektroden (10) und wenigstens zwei Empfangselektroden (19, 20) trägt, die seitlich zu beiden Seiten der vorerwähnten Reihe angeordnet sind, während das zweite Teil (1) mit ineinandergreifenden Kopplungselektroden (6, 7) versehen ist, die einen den Sendeelektroden (10) gegenüberliegenden vertikalen Abschnitt (40) sowie einen den Empfängerelektroden (19, 20) gegenüberliegenden horizontalen Abschnit (41) besitzen, und wobei weiterhin eine elektronische Schalteinrichtung (50) vorgesehen ist, die die Relativverschiebung der beiden Teile durch kapazitive Kopplung mittels der Kopplungselektroden (6, 7) zwischen den Sendeelektroden (10) und den Empfangselektroden (19, 20) mißt, dadurch gekennzeichnet, daß die Kopplungselektroden (6, 7) die Form eines L und eines umgekehrten L besitzen, die ineinandergreifen, wobei der vertikale Abschnitt (40) der L- und umgekehrten L-Form den Sendeelektroden (10) und der horizontale Abschnitt (41) der L- und umgekehrten L-Form der einen oder anderen Empfangselektrode (19, 20) gegenüberliegt, und daß Kopplungselektroden (6, 7) in L- und umgekehrter L-Form jeweils zu zweit so ineinandergreifen, daß sie ein Kopplungselektrodenpaar bilden, das Seite an Seite liegt und seitlich von geraden Linien begrenzt ist, wobei die horizontalen Abschnitte der L-Formen alle in die gleiche Richtung und die horizontalen Abschnitte der umgekehrten L-Formen alle in die gleiche Gegenrichtung weisen.

2. Einrichtung nach Anspruch 1, dadurch gekennzeichnet, daß die Kopplungselektrodenpaare (6, 7) periodisch mit einem Mittenabstand T angeordnet sind und daß die Sendeelektroden (10) eine solche Länge besitzen, daß 2N Sendeelektroden (10) einem Kopplungselektrodenpaar (6, 7) gegenüberliegen, wobei N eine ganze Zahl ist.

3. Einrichtung nach Anspruch 2, dadurch gekennzeichnet, daß die Empfangselektroden (19, 20) eine Länge besitzen, die einem ganzzahligen Vielfachen des Abstandes T gleich ist.

4. Einrichtung nach Anspruch 3, dadurch gekennzeichnet, daß die beiden Empfangselektroden (19, 20) um den Abstand T/2 in Längsrichtung zueinander versetzt liegen.

5. Einrichtung nach Anspruch 1, dadurch gekennzeichnet, daß in Verschieberichtung gemessen die Breite der Empfangselektroden (19, 20) kleiner, als die Breite der Reihe der Sendeelektroden (10) ist.

6. Einrichtung nach Anspruch 4, dadurch gekennzeichnet, daß die Sendeelektroden (10) mit 2N Ausgängen der elektronischen Schalteinrichtung (50) in der Weise verbunden sind, daß jede zweite Sendeelektrode mit dem gleichen Ausgang der elektronischen Schalteinrichtung (50) verbunden ist.

7. Einrichtung nach Anspruch 6, dadurch gekennzeichnet, daß die elektronische Schalteinrichtung (50) so beschaffen ist, daß die Sendeelektroden (10) selektiv von invariablen Spannungen $V_1$ und $V_2$ und von variablen Spannungen $V_x$ und $V_{x1}$ beaufschlagt werden, wobei die Spannungen $V_x$ und $V_{x1}$ in der Weise erzeugt werden, daß wenn das von den Empfangselektroden (19, 20) durch kapazitive Kopplung mittels der Kopplungselektroden (6, 7) empfangene Signal Null wird, dann die Spannungen $V_x$ und $V_{x1}$ ein Maß für die relative Verschiebung zwischen dem ersten und zweiten Teil bilden.

## Claims

1. Capacitive apparatus for measuring lengths and angles, comprising a first part (2) and a second part (1), arranged for relative sliding movement of one with respect to the other in a displacement and measuring direction, the first part (2) having elongated emitter electrodes (10) arranged perpendicularly to the said direction to constitute a series, and at least two receptor electrodes (19, 20) disposed laterally on both sides of the said series, the second part (1) being provided with coupling electrodes (6, 7) interlocked with each other, with the said coupling electrodes (6, 7) having a vertical portion (40) arranged facing the emitter electrodes (10) and a horizontal portion (41) arranged facing the receptor electrodes (19, 20), an electronic means (50) being arranged in such a way as to measure the relative displacement of the two said parts by capacitive coupling, through the coupling electrodes (6, 7), between the emitter electrodes (10) and the receptor electrodes (19, 20), characterised in that the coupling electrodes (6, 7) have the shapes of an L and a reversed L interlocking with each other, the vertical portion (40) of the L-shaped and reversed L-shaped electrodes being arraanged facing the emitter electrodes (10) and the horizontal portion (41) of the L-shaped and reversed L-shaped electrodes being arranged facing one or other of the receptor electrodes (19, 20), the said L-shaped and reversed L-shaped coupling electrodes (6, 7) being interlocked two by two so as to form pairs of coupling electrodes arranged side by side and bounded laterally by straight lines, with the horizontal portions of the L-shaped electrodes being directed in one common direction and those of the reversed L-shaped electrodes bein directed in a respective common direction opposed to said one direction.

2. Apparatus according to Claim 1, characterised in that the pairs of coupling electrodes (6, 7) are arranged with a centre to centre pitch having a distance T, and in that the width of the emitter electrodes is such that 2N emitter electrodes (10) are arranged facing a pair of coupling electrodes (6, 7), where N is a whole number.

3. Apparatus according to Claim 2, characterised in that the receptor electrodes (19, 20) have a length equal to a whole number of the said distances T.

4. Apparatus according to Claim 3, characterised in that it comprises two receptor electrodes (19, 20) offset with respect to each other by a distance T/2 in the said direction.

5. Apparatus according to Claim 1, characterised in that the width of the receptor electrodes (19, 20) is smaller than the width of the series of emitter electrodes (10) measured in the said direction.

6. Apparatus according to Claim 4, characterised in that the emitter electrodes (10) are connected to 2N outputs of the electronic means (50), in such a way that every 2Nth emitter electrode is connected to the same output of the electronic means (50).

7. Apparatus according to Claim 6, characterised in that the electronic means (50) is so arranged that the emitter electrodes (10) are selectively connected to non-variable voltages $V_1$ and $V_2$ and to variable voltages $V_x$ and $V_{x1}$, the voltaes $V_x$ and $V_{x1}$ being generated in such a way that the signal received on the receptor electrodes (19, 20) by capacitive coupling through the coupling electrodes (6, 7) becomes equal to zero, whereby the voltages $V_x$ and $V_{x1}$ constitute a measure of the relative displacement between the first part and the second part.

EP 0 227 591 B1

# FIG.1

# FIG.2

# FIG.3

# FIG.4

EP 0 227 591 B1

# FIG.5